# EUROPÄISCHE PATENTANMELDUNG

(11) **EP 2 692 519 A1**
(43) Veröffentlichungstag der Anmeldung: **05.02.2014**
(21) Anmeldenummer: 12178989.5
(22) Anmeldetag: 02.08.2012
(51) Int. Cl.: B32B 5/18, C08J 9/00, C08J 9/16, C08K 5/00, C08K 5/524, C08K 5/5377, C08L 25/08, B32B 9/04

(54) **Wärmeformbeständiger und stabilisierter Schaumstoff aus Styrolcopolymeren**

(71) Anmelder: BASF SE, 67056 Ludwigshafen (DE)
(72) Erfinder: Die Erfindernennung liegt noch nicht vor
(74) Vertreter: Rippel, Hans Christoph

(57) **Zusammenfassung**

Ein Schaumstoff auf Basis von thermoplastischen Polymeren P, enthaltend,
P1) 30 bis 100 Gewichtsteile, bevorzugt 45 bis 75 Gewichtsteile eines oder mehrerer in der Beschreibung bezeichneter Styrolcopolymere,
und
S) 0,1 bis 5 Gewichtsteile, bevorzugt 0,5 bis 3 Gewichtsanteile, bezogen auf P, mindestens eines Stabilisators aus der Gruppe bestehend aus
S1) Phosphiten der Formel (I)

P(OR)₃ (I)

wobei
R
gleich oder verschieden, vorzugsweise gleich, eine Phenylgruppe bedeutet, die mit 1 bis 3 C₁-C₆-Alkylgruppen substituiert ist,

und
S2) Phosphiniten der Formel (II), 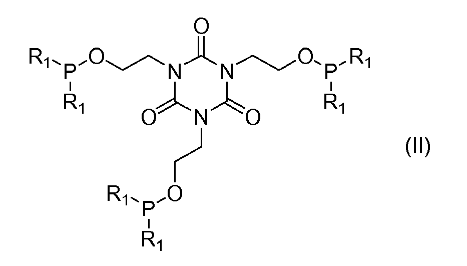 wobei R¹ gleich oder verschieden, vorzugsweise gleich, eine Phenylgruppe, die mit 1 bis 3 C₁-C₆-Alkylgruppen substituiert ist oder eine C₁-C₁₀-Alkylgruppe bedeutet,
eignet sich als Isolier-, Leichtbau- und Verbundmaterial

## Beschreibung

Die Erfindung betrifft einen wärmeformbeständigen Schaumstoff, auf Basis von thermoplastischen Polymeren P, enthaltend Styrol-Maleinsäureanhydrid-Copolymere (SMA) und Styrol-Acrylnitril-Copolymere (SAN), oder Styrol-Acrylnitril-Maleinsäureanhydrid-Terpolymere (SANMA). Weiterhin betrifft die Erfindung Verfahren zur Herstellung des Schaumstoffs sowie dessen Verwendung als Isoliermaterial und als Strukturschaum bspw. für Leichtbauanwendungen.

Schaumstoffe auf Polystyrolbasis werden in großem Maß in der Bauindustrie zum Isolieren von Gebäudeteilen wie Fundamenten, Wänden, Böden und Dächern eingesetzt. Für diese Anwendung werden Schaumstoffe benötigt, die eine möglichst geringe Wärmeleitfähigkeit und damit eine große Isolationsfähigkeit besitzen. Um gute Isolationseigenschaften zu erreichen, werden bevorzugt geschlossenzellige Extrusionsschaumstoffe eingesetzt, da diese im Vergleich zu offenzelligen Extrusionsschaumstoffen eine deutlich bessere Isolationsfähigkeit aufweisen.

Für den Einsatz von Schaumstoffen in der Bauindustrie wird neben guten Isolationseigenschaften auch eine gute Wärmeformbeständigkeit bei geringer Dichte erwartet. Vor allem für Anwendungen, bei denen die Schaumstoffe hohen Temperaturen ausgesetzt sind, ist die Wärmeformbeständigkeit sehr wichtig, da es sonst zu Verformungen und somit zu einer Beschädigung der Isolierung kommen kann. Bauteile, bei denen eine gute Wärmeformbeständigkeit eine besondere Rolle spielt, sind beispielsweise Dachisolierungen und Wandisolierungen, die direkter Sonneneinstrahlung ausgesetzt sind.

SMA (Styrolmaleinsäureanhydrid) und SAN (Styrolacrylnitril) sind gängige Styrolcopolymere für Anwendungen, bei denen erhöhte Solvens- und Temperaturbeständigkeit im Vergleich zu reinem Polystyrol gefordert sind. Gerade erhöhte Mengen an SMA verbessern die Wärmeformbeständigkeit aufgrund der hohen Glasübergangstemperatur des Polymers beachtlich. Dies erfordert jedoch auch erhöhte Verarbeitungstemperaturen im Extruder.

Aus verschiedenen Veröffentlichungen (siehe zum Beispiel WO 92/15638, WO 90/06956, WO 92/15638; M. Urushizaki, S. Matsui, S. Sakamoto, H. Aida, Kobunshi Ronbunshu 1975, 32, 342-348) ist bekannt, dass es bei erhöhten Temperaturen ab ca. 200-240 °C (abhängig von der exakten Zusammensetzung des untersuchten Systems) zur spontanen Abspaltung von CO₂ aus Maleinsäureanhydrid-haltigen Polymeren oder entsprechenden Copolymeren kommt. Diese eigentliche Zersetzungsreaktion kann in der Folge zum intramolekularen Molekulargewichtsaufbau (zum Beispiel WO 92/15638) oder auch insbesondere durch Reaktion mit Acrylnitrilgruppen-enthaltenden Copolymeren zum intermolekularen Molekulargewichtsaufbau (zum Beispiel EP 0 091 417) führen. Je höher hierbei der Anteil an MSA (Maleinsäureanhydrid) und ACN (Acrylnitril) in den Polymeren ist, desto stärker und rascher Verläuft die Vernetzung. Zur Verringerung dieser unerwünschten Nebenreaktion kann der Anteil an MSA oder ACN in den entsprechenden Polymeren stark reduziert werden. Für hochtemperatur - und lösungsmittelbeständige Polymere ist diese Reduktion jedoch nicht möglich, da sonst die geforderten Eigenschaften, d.h. die nötige Temperatur- und Solvensbeständigkeit, nicht mehr erreicht werden.

Ein dramatischer Nebeneffekt der thermischen Belastung ist im schlimmsten Fall der Ausfall der bei der Herstellung verwendeten Geräte und Maschinen aufgrund unkontrolliertem Molekulargewichtsaufbau, was zum völligen Ausfall der Geräte führen kann. Aufgrund dessen ist die unerwünschte Vernetzung der Polymere während der Verarbeitung in den jeweiligen Geräten unbedingt zu verhindern.

Daneben beeinflusst die Abspaltung von CO2 aus Maleinsäureanhydrid-haltigen Polymeren bzw. entsprechenden Copolymeren das Schäumverhalten. Die Freisetzung von CO2 wird durch eine Vielzahl von Faktoren wie Polymerzusammensetzung, Verweilzeit und Temperatur entlang der Prozesskette bestimmt. Damit kommt es je nach Steuerung der Verfahrensparameter bzw. bei Rezepturänderungen zu einer sich verändernden Freisetzung von CO2, die wiederum das Schäumverhalten beeinflusst. Der Gesamtanteil an Treibmitteln und damit das Schäumverhalten ist somit nur noch begrenzt steuerbar was in der Folge zu großen technischen Problemen führt.

Aufgabe war es daher, Schäume auf Basis von MSA- (Maleinsäureanhydrid) und ACN-(Acrylnitril)haltigen Copolymeren zu entwickeln, welche gegen die beschriebenen Reaktionen stabilisiert sind.

Für thermoplastische Werkstoffe mit MSA- und ACN-Anteil wurden verschiedene Additive zur Unterbindung von Zersetzung und Vernetzung vorgeschlagen. In der US 5,132,364 sind Poly-(p-hydroxystyrole) zur Unterdrückung der Vernetzung von MSA - und SAN-haltigen Styrolcopolymeren beschrieben. In der US 4,397,975 wird schweflige Säure für diesen Zweck vorgeschlagen. Die US4,433,086 beschreibt die Zugabe von halogenierten aromatischen Dicarbonsäuren als Stabilisatoren zu anhydrid- und nitrilhaltigen Polymeren. Schließlich sind in einer Reihe von Schriften Additive auf Phosphorbasis wie Phosphorsäure, Phosphorsäureester und Phosphiten zur Unterdrückung der Vernetzung von MSA- und ACN-haltigen Polymeren offenbart (siehe zum Beispiel EP-A 0 091 417, US 4,661,656, US 4,387,191, US 4,397,975 und US 4,433,086).

Gerade genannte säurehaltige Additive sind jedoch in der Regel aufgrund ihrer korrosiven Wirkung in großtechnischen Prozessen und Verfahren unerwünscht.

Weiterhin wurde insbesondere für die letzte Gruppe von Additiven eine Anwendung in Schäumen bisher nicht in Erwägung gezogen, da diese Inhibitoren einen z.T. stark weichmachenden Charakter besitzen. Dies ist einerseits bei Schaumstoffen grundlegend unerwünscht, da dies in signifikant verringerten Temperaturbeständigkeiten der Produkte resultieren kann, was gerade bei den gewünschten Anwendungen dem eigentlichen Ziel entgegen wirken würde. Andererseits resultiert die Erniedrigung der Glasübergangstemperatur in grundlegend veränderten Schäumeigenschaften des Produktes, was negative Auswirkungen auf die Zellstruktur und somit sowohl auf mechanische Eigenschaften (z.B. Verhalten unter Druck- und Biegebelastung) als auch die thermische Leitfähigkeit hat. Schließlich führt ein hoher Gehalt an Weichmachern zur Erniedrigung der Viskosität der Schmelze was maßgeblich die Verarbeitungsbedingungen beeinflusst und so eine reibungslose Produktion stark erschweren kann.

Es wurde nun gefunden, dass sich bestimmte Phosphite und Phosphinite als Additive zur Unterbindung der intra- und intermolekularen Vernetzung von MSA- und ACN-Einheiten aufweisenden Styrolcopolymerschäumen eignen.

Gegenstand der Erfindung ist daher ein Schaumstoff auf Basis von thermoplastischen Polymeren P, enthaltend,
P1) 30 bis 100 Gewichtsteile, bevorzugt 45 bis 75 Gewichtsteile eines oder mehrerer Styrolcopolymere, enthaltend,
P11) 1,0 bis 35 Gew.-% (bezogen auf P1), bevorzugt 1,5-30 Gew.-%, besonders bevorzugt 2,0 bis 28 Gew.% einpolymerisierte Maleinsäureanhydrid -Einheiten,
P12) 64 bis 99 Gew.-% bezogen auf (P1), bevorzugt 98,5-68,5 Gew.-%, besonders bevorzugt 98 bis 72 Gew.%, einpolymerisiertes Styrol und/oder alpha-Methylstyrol und
P13) 0 bis 35 Gew.-%, bevorzugt 0 bis 30 Gew.-%, besonders bevorzugt 0 bis 28 Gew.-%, (bezogen auf (P1), einpolymerisiertes Acrylnitril,
P2) 0 bis 70 Gewichtsteile, bevorzugt 25 bis 55 eines oder mehrerer Styrol-Acrylnitril-Copolymere (SAN) mit einem Styrol- und/oder alpha-Methylstyrolgehalt im Bereich von 65 bis 90 Gew.-%, bezogen auf (P2),
P3) 0 bis 15 Gewichtsteile, bevorzugt 0 bis 10 Gewichtsteile eines oder mehrerer thermoplastischen Polymere aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
wobei mindestens eine der Komponenten (P13) und (P2) in einem Anteil von mindestens 1 Gew.-% bzw. Gewichtsteilen vorliegt und
wobei die Summe aus den Polymerkomponenten (P1), (P2) und (P3) der thermoplastischen Polymere (P) 100 Gewichtsteile ergibt,
S) 0,1 bis 5 Gewichtsteile, bevorzugt 0,5 bis 3 Gewichtsanteile, bezogen auf P, mindestens eines Stabilisators aus der Gruppe bestehend aus
S1) Phosphiten der Formel (I)

   P(OR)₃ (I)

   wobei
   R gleich oder verschieden, vorzugsweise gleich, eine Phenylgruppe bedeutet, die mit 1 bis 3 C₁-C₆-Alkylgruppen substituiert ist, insbesondere 2,4-di-tert-Butylphenyl, und
S2) Phosphiniten der Formel (II), 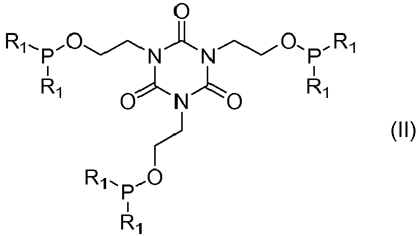 wobei R¹ gleich oder verschieden, vorzugsweise gleich, eine Phenylgruppe, die mit 1 bis 3 C₁-C₆-Alkylgruppen substituiert ist oder eine C₁-C₁₀-Alkylgruppe bedeutet und
Z) 0 bis 10 Gewichtsteile, bevorzugt 0,2 bis 5 Gewichtsteile, bezogen auf P, weiterer Zusatzstoffe.

Weiterhin Gegenstand der Erfindung ist ein Verfahren zur Herstellung des erfindungsgemäßen Schaumstoffs sowie die Verwendung dieses Schaumstoffs, insbesondere als Isoliermaterial und Strukturschaumstoff in der Bauindustrie, dem Möbelbau, dem Messebau, der Automobilindustrie, dem Boots- und Schiffsbau und als Strukturschaum in Windkraftanlagen.

Der erfindungsgemäße Schaumstoff weist eine hohe Wärmeform- und Lösungsmittelbeständigkeit auf und lässt sich auch bei Temperaturen von > 250 °C zersetzungsfrei verarbeiten. Der erfindungsgemäße Schaumstoff weist weiterhin durch die Zugabe der eingesetzten Stabilisatoren eine homogenere und qualitativ hochwertigere Oberflächenstruktur auf. Die eingesetzten Stabilisatoren zeigen zudem einen Synergismus mit Flammschutzmitteln, insbesondere phosphorhaltigen.

Der erfindungsgemäße Schaumstoff weist im Allgemeinen eine Zellzahl im Bereich 1 bis 30 Zellen pro mm, bevorzugt von 1 bis 20 Zellen pro mm, insbesondere von 3 bis 20 Zellen pro mm auf.

Die Dichte des erfindungsgemäßen Schaumstoffes liegt bevorzugt im Bereich von 20 bis 150 kg/m³, besonders bevorzugt im Bereich von 20 bis 100 kg/m³.

In der Regel weist der erfindungsgemäße Schaumstoff eine Druckfestigkeit, gemessen nach DIN EN 826, im Bereich von 100 bis 2500 kPa, bevorzugt im Bereich von 150 bis 1000 kPa, besonders bevorzugt 200 bis 800 kPa, auf.

Der erfindungsgemäße Schaumstoff ist bevorzugt geschlossenzellig, d.h. dass die Zellen gemessen nach DIN ISO 4590 zu mindestens 90 %, insbesondere zu 95 bis 100% geschlossen sind.

Der erfindungsgemäße Schaumstoff ist gegebenenfalls flammgeschützt und erfüllt beispielsweise die Anforderungen von genormten Brandtests nach DIN 4102 B2, europäischer Einstufung (Class E).

Die erfindungsgemäß als Polymerkomponente P eingesetzten Styrolcopolymeren (P1), welche einpolymerisierte Maleinsäureanhydrid- oder Maleinsäureimid-Einheiten enthalten, Styrolacrylnitrilcopolymer (SAN) (P2) und die thermoplastischen Polymere (P3) können nach dem Fachmann bekannten Verfahren, beispielsweise durch radikalische, anionische oder kationische Polymerisation in Substanz, Lösung, Dispersion oder Emulsion hergestellt werden. Bevorzugt ist im Falle von SAN und SMA die Herstellung durch radikalische Polymerisation.

Bevorzugt weisen die Polymere P1 als auch Mischungen mit der thermoplastischen Polymeren P eine Glasübergangstemperatur Tg von 120°C oder höher, bevorzugt im Bereich von 125 bis 210°C, gemessen mittels DSC nach DIN 53765 (ISO 11357-2) bei einer Aufheizrate von 20 K/min, auf. Die Glasübergangstemperatur kann mittels dynamischer Differenzkalorimetrie (Differential Scanning Calorimetry, DSC) bei einer Aufheizrate von 20 K/min bestimmt werden.

Der erfindungsgemäße Schaumstoff umfasst die oben angegebene Komponente P1, welche einpolymerisiertes Styrol und Maleinsäureanhydrid enthält.

In einer bevorzugten Ausführungsform enthält die Komponente P1 ein oder mehrere Styrolcopolymere, welche 10 bis 35 Gew.-%, bevorzugt 15-30 Gew.-%, besonders bevorzugt 22 bis 28 Gew.% (bezogen auf P1), einpolymerisierte Maleinsäureanhydrideinheiten und einen Anteil an einpolymerisiertem Styrol und/oder alpha-Methylstyrol von 65 bis 90 Gew.-%, bevorzugt 85-70 Gew.-%, besonders bevorzugt 78 bis 72 Gew.%, (alle Gew.-%-Angaben bezogen auf P1) aufweisen. In dieser Ausführungsform enthält die Komponente P1 kein einpolymerisiertes Acrylnitril P13.

In einer weiteren bevorzugten Ausführungsform enthält die Komponente (P1) ein oder mehrere Styrolcopolymere, welche 1,0 bis 10 Gew.-%, bevorzugt 1,5 bis 10 Gew.-%, besonders bevorzugt 2,0 bis 5 Gew.-% (bezogen auf P1), einpolymerisierte Maleinsäureanhydrideinheiten P11 und 18 bis 35 Gew.-% bevorzugt 18 bis 30 Gew.-%, besonders bevorzugt 18 bis 28 Gew.-%, einpolymerisierte Acrylnitrileinheiten P13 enthalten und einen Anteil an einpolymerisiertem Styrol und/oder alpha-Methylstyrol P12 von 64 bis 81 Gew.-%, bevorzugt 68,5 bis 80,5Gew.-%, besonders bevorzugt 70 bis 80 Gew.-% (alle Gew.-%-Angaben bezogen auf P1) aufweisen.

In einer bevorzugten Ausführungsform ist die Komponente P12 Styrol.

In einer weiteren Ausführungsform enthält die Komponente P1 0 bis 10 Gew.-% (bezogen auf P1) einpolymerisierte Maleinsäureimide (P14).

Vorzugsweise besteht die Komponente (P1) aus einem oder mehreren der genannten Styrolcopolymere

Bevorzugte Maleinsäureimide sind Maleinimid selbst, N-Alkyl-substituierte Maleinsäureimide (vorzugsweise mit C₁-C₆-Alkyl) und N-Phenyl-substituierte Maleinsäureimide.

In einer weiteren bevorzugten Ausführungsform besteht die Komponente P1 aus den Komponenenten P11 und P12.

In einer weiteren bevorzugten Ausführungsform besteht die Komponente P1 aus den Komponenten P11, P12 und P13.

In einer weiteren bevorzugten Ausführungsform besteht die Komponente P1 aus den Komponenten P11, P12 und P14.

In den genannten bevorzugten Ausführungsformen ist die Komponente P12 bevorzugt Styrol.

Besonders bevorzugt werden als Komponente (P1) Styrol-Maleinsäureanhydrid-Copolymere (SMA), Styrol-Acrylnitril-Maleinsäureanhydrid-Terpolymeren (SANMA), Styrol-Maleinsäureanhydrid-Phenylmaleinimid-Terpolymere (SMAPMI) oder Mischungen davon eingesetzt.

Ganz besonders bevorzugt sind SMA und SANMA. Insbesondere bevorzugt ist SMA.

Der erfindungsgemäße Schaumstoff enthält als Komponente (P2) 0 bis 50 Gewichtsteile, bevorzugt 30 bis 45 eines oder mehrerer Styrol-Acrylnitril-Copolymere (SAN) mit einem Styrolgehalt im Bereich von 65 bis 90 Gew.-%, bezogen auf (P2).

Die SAN Komponente (P2) enthält im Allgemeinen 18 bis 40 Gew.-%, bevorzugt 20 bis 35 Gew.-% und insbesondere 20 bis 30 Gew.-% einpolymerisiertes Acrylnitril und im Allgemeinen 60 bis 82 Gew.-%, bevorzugt 65 bis 80 Gew.-% und insbesondere bevorzugt 70 bis 80 Gew.-% einpolymerisiertes Styrol und/oder alpha-Methylstyrol (jeweils bezogen auf SAN).

Das SAN (P2) kann gegebenenfalls 0 bis 22 Gew.-% mindestens eines einpolymerisierten Monomers aus der Gruppe bestehend aus Alkyl(meth)acrylaten, (Meth)acrylsäure und Maleinimiden enthalten. Bevorzugte Maleinimide sind die als Komponente P14 genannten, insbesondere N-Phenylmaleinimid. In einer bevorzugten Ausführungsform besteht das SAN ausschließlich aus Styrol und Acrylnitril.

Die erfindungsgemäß eingesetzten SAN (P2) weisen im Allgemeinen eine Schmelzvolumenrate MVR (220°C/ 10 kg) nach ISO 113 im Bereich von mehr als 5 cm³ / 10 min auf, bevorzugt mehr als 20 cm³ / 10 min und besonders bevorzugt mehr als 50 cm³ / 10 min.

Geeignete SAN-Typen sind beispielsweise Luran® 3380, Luran® 33100, Luran® 2580, Luran® HH120 und Luran® VLN der Styrolution GmbH.

Bevorzugt werden mittelviskose und niedrigviskose Typen der Polymeren (P1) und (P2) eingesetzt. Bevorzugt liegt die Viskositätszahl, gemessen nach DIN 53737 im Bereich von 40 bis 100 ml/g, bevorzugt 50 bis 80 ml/g (gemessen in einer 0,5 gew.-%igen Lösung in Dimethylformamid bei 23°C).

Die erfindungsgemäße Polymerkomponente P enthält neben einer Komponente, die einpolymersiertes Maleinsäureanhydrid enthält, mindestens eine Komponente (P13 oder P2), die einpolymerisiertes Acrylnitril enthält, d.h. der Anteil an P13 und/oder P2 ist ≥1 Gew.-%, bevorzugt mindestens 5 Gew.-%.

Bevorzugt sind Polymerkomponenten P, welche die Komponente P2 und keine Komponente P13 aufweisen.

Bevorzugt sind auch Polymerkomponenten P, welche die Komponente P13 und keine Komponente P2 aufweisen.

Der erfindungsgemäße Schaumstoff enthält als Komponente (P3) 0 bis 15 Gewichtsteile, bevorzugt 0 bis 10 Gewichtsteile eines oder mehrerer thermoplastischen Polymeren aus der Gruppe bestehend aus von (P1) und (P2) verschiedenen Styrolpolymeren, Polyacrylaten, Polycarbonaten, Polyestern, Polyamiden, Polyethersulfonen, Polyetherketonen und Polyethersulfiden.

Als thermoplastische Polymere (P3) der Polymerkomponente P werden gegebenenfalls Styrolpolymere und -copolymere, beispielsweise Acrylnitril-Butadien-Styrol (ABS), Acrynitril-Styrol-Acrylester (ASA) und Styrol-Methacrylsäure; Polyolefine beispielsweise Polypropylen (PP) Polyethylen (PE) und Polybutadien; Polyacrylate beispielsweise Polymethylmethacrylat (PMMA); Polycarbonate (PC); Polyester beispielsweise Polyethylenterephthalat (PET) und Polybutylenterephthalat (PBT); Polyamide beispielsweise Polyamid 6 (PA6), Polyamid 6,6, Polyamid 6,1 und Polyamid 6/6,6; Polyethersulfone (PES); Polyetherketone (PEK); Polyethersulfide (PES) oder Mischungen davon eingesetzt.

In einer bevorzugten Ausführungsform ist der erfindungsgemäße Schaumstoff ausschließlich aus den Polymerkomponenten (P1) und (P2) aufgebaut und enthält kein (0 Gew.-%) thermoplastisches Polymer P3.

Aufgrund der Brandschutzbestimmungen in der Bauindustrie und anderen Branchen werden bevorzugt ein oder mehrere Flammschutzmittel zugegeben. Besonders bevorzugt enthält der Schaumstoff zusätzlich 1 bis 15 Gewichtsanteile, bevorzugt 3 bis 10 Gewichtsanteile, bezogen auf 100 Gewichtsteile P, mindestens eines Flammschutzmittels (F).

Bevorzugt als Flammschutzmittel sind halogenhaltige Polymere, die vorzugsweise ein mittleres Molekulargewicht im Bereich von 5.000 bis 300.000, insbesondere 20.000 bis 150.000, bestimmt mittels Gelpermeationschromatographie (GPC) aufweisen.

Das halogenierte Polymer weist in der thermogravimetrischen Analyse (TGA) einen Gewichtsverlust von maximal 5 Gew.-% bis zu einer Temperatur von 250 °C, bevorzugt bei einer Temperatur bis 270 °C und besonders bevorzugt bis zu einer Temperatur von 370 °C auf.

Bevorzugte halogenierte Polymere weisen einen Bromgehalt im Bereich von 0 bis 80 Gew.-%, bevorzugt 10 bis 75 Gew.-% und einen Chlorgehalt im Bereich von 0 bis 50 Gew.-%, bevorzugt 1 bis 25 Gew.-%, bezogen auf das halogenierte Polymer, auf.

Bevorzugte halogenierte Polymere als Flammschutzmittel sind bromiertes Polystyrol oder Styrol-Butadien-Blockcopolymere mit einem Bromgehalt im Bereich von 40 bis 80 Gew.-%

Weitere bevorzugte halogenierte Polymere als Flammschutzmittel sind Polymere, welche Tetrabrombisphenol-A-Einheiten (TBBPA) aufweisen, beispielsweise Tetrabrombisphenol-A-Diglycidylether-Verbindungen (CAS-Nummer 68928-70-1 oder 135229-48-0).

Als Flammschutzmittel enthält der erfindungsgemäße Schaumstoff bevorzugt bromierte Polystyrol-Oligomere bzw. Polymere oder ein Oligomeres oder Polymeres, welches Tetrabrombisphenol-A-Einheiten aufweist, beispielsweise Tetrabrombisphenol-A-diallylether.

Der Schaumstoff kann zusätzlich 0,01 bis 4 Gewichtsanteile, bevorzugt 0,5 bis 3 Gewichtsanteile, bezogen auf 100 Gewichtsteile P, eines Flammschutzsynergisten enthalten.

Bevorzugt als Flammschutzsynergisten sind Antimontrioxid, Dicumyl, Hydroxylamine wie N-Hydroxysuccinimid, Distearylhydroxylamin, N,N-Dibenzylhydroxylamin und 4-Hydroxy-TEMPO (2,2,6,6-Tetramethylpiperidin-N-oxyl), Anhydride wie (+)-O,O'-Diacetyl-L-Weinsäureanhydrid und Mischungen davon und Disulfide wie p-Tolyldisulfid, Dibenzyldisulfid sowie polymere und oligomere Disulfide.

Bevorzugt ist ein Flammschutzsystem aus bromierten Polystyrol-Oligomeren bzw. Polymeren oder einem Oligomer oder Polymer, welches Tetrabrombisphenol-A-Einheiten aufweist, insbesondere Tetrabrombisphenol-A-diallylether, und Antimontrioxid.

Zusätzlich kann der Schaumstoff weitere Flammschutzmittel und Flammschutzsynergisten, beispielsweise Blähgraphit, roten Phosphor, Triphenylphosphat und 9,10-Dihydro-9-oxa-10-phosphaphenanthren-10-oxid enthalten.

Gewünschtenfalls kann der Schaumstoff zusätzlich 0 bis 10 Gewichtsanteile, bezogen auf 100 Gewichtsteile P, weiterer Zusatzstoffe (Z), wie Nukleierungsmittel, Füllstoffe (beispielsweise mineralische Füllstoffe wie Glasfasern), Weichmacher, lösliche und unlösliche Farbstoffe sowie Pigmente und/oder IR-Absorber wie Ruß, natürliches oder synthetisches Graphit, Kokse wie Grünkoks oder Petrolkoks, Graphen, Aluminiumpulver und Titandioxid enthalten. Bevorzugt wird Graphit, Koks und Ruß in Mengen von im Allgemeinen 0,05 bis 25 Gew.-%, insbesondere bevorzugt in Mengen von 2 bis 8 Gew.-%, bezogen auf P zugegeben werden. Geeignete Teilchengrößen für das Graphit liegen im Bereich von 1 bis 50 µm, bevorzugt im Bereich von 2 bis 10 µm.

Als wesentlicher Aspekt für die Gewährleistung konstanter Produkteigenschaften hat sich der Einsatz von UV-Stabilisatoren erwiesen. Speziell bei SMA führt starke UV-Einstrahlung zu einer sichtbaren Vergilbung und zur chemischen Umwandlung des Materials, die mit einer signifikanten Versprödung einhergeht. Für die Wahl geeigneter UV-Stabilisatoren spielt die Reaktivität mit SMA eine entscheidende Rolle. Während Stabilisatoren auf Basis von Benzotriazolen wie Tinuvin 234 die UV-Beständigkeit ohne Veränderung der Verarbeitungs- und Schaumeigenschaften verbessern kann, eignen sich Stabilisatoren auf Basis sterisch gehinderter Amine wie Uvinul 4050 und Tinuvin 770 in geringerem Maße für das erfindungsgemäße Stoffsystem. Bei erhöhten Temperaturen kann der Zusatz von sterisch gehinderten Aminen zu einer Reaktion mit SMA unter Abspaltung gasförmiger Reaktionsprodukte führen.

Bevorzugt enthält der Schaumstoff als Zusatzstoff (Z) einen UV-Stabilisator auf Basis von Benzotriazolen in Mengen im Bereich von 0,05 bis 5 Gewichtsanteilen, bevorzugt 0,1 bis 1 Gewichtsanteilen, bezogen auf 100 Gewichtsteile Polymer P.

Als Nukleierungsmittel können gegebenenfalls feinteilige, anorganische Feststoffe wie Talkum, Metalloxide, Silikate oder Polyethylenwachse in Mengen von im Allgemeinen 0,1 bis 10 Gewichtsanteilen bevorzugt 1 bis 3 Gewichtsanteilen bezogen auf P, eingesetzt werden. Der mittlere Teilchendurchmesser des Nukleierungsmittels liegt in der Regel im Bereich von 0,01 bis 100 µm, bevorzugt 1 bis 60 µm. Ein besonders bevorzugtes Nukleierungsmittel ist Talkum.

Als Stabilisatorkomponente (S) enthält der erfindungsgemäße Schaumstoff ein oder mehrere Stabilisatoren aus der Gruppe der
S1) Phosphite der Formel (I)

   P(OR)₃ (I)

   wobei
   - R: gleich oder verschieden, vorzugsweise gleich, eine Phenylgruppe bedeutet, die mit 1 bis 3 C₁-C₆-Alkyl substituiert ist, insbesondere 2,4-di-tert-Butylphenyl
   und
S2) Phosphinite der Formel (II), 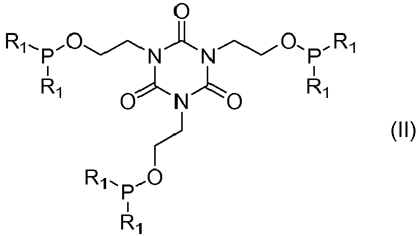 wobei
   - R¹: gleich oder verschieden, vorzugsweise gleich, eine Phenylgruppe, die mit 1 bis 3 C₁-C₆-Alkylgruppen substituiert ist, oder eine C₁-C₁₀-Alkylgruppe bedeutet.

Bevorzugt als Stabilisator der Formel (I) ist Tris(2,4-di-tert-butylphenyl)phosphit (I-a).

Bevorzugt als Verbindung der Formel (II) ist 1,3,5-Tris(2-hydroxyethyl)cyanursäure-diphenylphosphinit (II-a).

Besonders bevorzugt ist die Verbindung (I-a).

Die Stabilisatoren sind an sich bekannt. Sie sind entweder kommerziell erhältlich oder können nach bekannten, dem Fachmann geläufigen Methoden, wie sie zum Beispiel in DE 2940620 oder Lehrbüchern der Organischen Chemie, wie: J. Clayden, N. Greeves, S. Warren, P. Wothers Organic Chemistry, Oxford University Press, Oxford 2001*,* beschrieben sind, hergestellt werden.

Die Verbindung (I-a) ist beispielsweise von der BASF SE unter der Bezeichnung Irgafos^{®} 168 kommerziell erhältlich.

Bevorzugt ist aus ökonomischen Gründen der Einsatz einer einzigen Verbindung als Stabilisator.

Der erfindungsgemäße Schaumstoff enthält 0,1 bis 5, bevorzugt 0,5 bis 3 Gew.-Teile (bezogen auf 100 Gew.-Teile der Komponente P) an dem Stabilisator.

Gegenstand der Erfindung ist auch die Verwendung eines erfindungsgemäßen Stabilisators zur Stabilisierung von Schaumstoffen auf Basis von SMA und SAN-Copolymeren gegen durch thermische Belastung hervorgerufene inter- und im Falle von Terpolymeren intramolekulare Vernetzung.

Weiterhin Gegenstand der Erfindung ist ein Verfahren zur Herstellung des erfindungsgemäßen Schaumstoffs, umfassend die Schritte
(a) Erzeugen einer Polymerschmelze aus thermoplastischen Polymeren P, Stabilisator und gegebenenfalls weiteren Zusatzstoffen.
(b) Einbringen eines oder mehrerer Treibmittel,
(c) Extrusion oder Granulierung der schäumbaren Schmelze zu dem gewünschten Schaumstoffprodukt.

Bevorzugt als erfindungsgemäße Schaumstoffe sind Extrusionsschaumstoffe (XPS) und expandierbare Granulate (EPS).

In einer bevorzugten Ausführungsform der Erfindung ist der erfindungsgemäße Schaumstoff ein Extrusionsschaumstoff erhältlich durch ein Verfahren umfassend die Schritte
(a) Erzeugen einer Polymerschmelze aus thermoplastischen Polymeren P enthaltend
   P1) 30 bis 100 Gewichtsteile, bevorzugt 45 bis 75 Gewichtsteile eines oder mehrerer Styrolcopolymere, enthaltend,
   P11) 1,0 bis 35 Gew.-% (bezogen auf P1), bevorzugt 1,5-30 Gew.-%, besonders bevorzugt 2,0 bis 28 Gew.% einpolymerisierte Maleinsäureanhydrid -Einheiten,
   P12) 64 bis 99 Gew.-% bezogen auf (P1), bevorzugt 98,5-68,5 Gew.-%, besonders bevorzugt 98 bis 72 Gew.%, einpolymerisiertes Styrol und/oder alpha-Methylstyrol und
   P13) 0 bis 35 Gew.-%, bevorzugt 0 bis 30 Gew.-%, besonders bevorzugt 0 bis 28 Gew.-%, (bezogen auf (P1), ein polymerisiertes Acrylnitril,
   P2) 0 bis 70 Gewichtsteile, bevorzugt 25 bis 55 eines oder mehrerer Styrol-Acrylnitril-Copolymere (SAN) mit einem Styrol- und/oder alpha-Methylstyrolgehalt im Bereich von 65 bis 90 Gew.-%, bezogen auf (P2),
   P3) 0 bis 15 Gewichtsteile, bevorzugt 0 bis 10 Gewichtsteile eines oder mehrerer thermoplastischen Polymere aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
      wobei mindestens eine der Komponenten (P13) und (P2) in einem Anteil von mindestens 1 Gew.-% bzw. Gewichtsteilen vorliegt und
      wobei die Summe aus den Polymerkomponenten (P1), (P2) und (P3) der thermoplastischen Polymere (P) 100 Gewichtsteile ergibt,
   S) 0,1 bis 5 Gewichtsteile, bevorzugt 0,5 bis 3 Gewichtsanteile, bezogen auf P, mindestens eines Stabilisators aus der Gruppe bestehend aus S1) Phosphiten der Formel (I)

      P(OR)₃ (I)

      wobei
      R gleich oder verschieden, vorzugsweise gleich, eine Phenylgruppe bedeutet, die mit 1 bis 3 C₁-C₆-Alkylgruppen substituiert ist, insbesondere 2,4-di-tert-Butylphenyl,
      und S2)
      Phosphiniten der Formel (II), 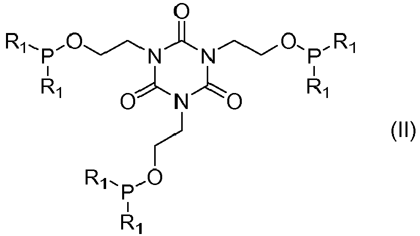 wobei R¹ gleich oder verschieden, vorzugsweise gleich, eine Phenylgruppe, die mit 1 bis 3 C₁-C₆-Alkylgruppen substituiert ist oder eine C₁-C₁₀-Alkylgruppe bedeutet.
   Z) 0,1 bis 10 Gewichtsteile, bevorzugt 0,2 bis 5 Gewichtsteile, bezogen auf P, weiterer Zusatzstoffe.
(b) Einbringen einer Treibmittelkomponente, bevorzugt
   T1) 1 bis 5 Gewichtsteile, bezogen auf P, Kohlendioxid als Treibmittel,
   T2) 1 bis 5 Gewichtsteile, bezogen auf P, Aceton als Cotreibmittel,
   T3) 0 bis 1 Gewichtsteile, bezogen auf P, eines oder mehrerer Co-Treibmittel ausgewählt aus der Gruppe bestehend aus C₁-C₄ Alkanen,
   in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum.

Das Erhitzen der Polymerkomponente P (Stufe (a) des erfindungsgemäßen Verfahrens) kann mittels beliebiger Einrichtungen, die auf dem Fachgebiet bekannt sind, wie mittels eines Extruders, eines Mischers (zum Beispiel eines Kneters) erfolgen. Bevorzugt ist der Einsatz von Aufschmelzextrudern (Primärextrudern). Stufe (a) des erfindungsgemäßen Verfahrens kann kontinuierlich oder diskontinuierlich durchgeführt werden, wobei eine kontinuierliche Fahrweise bevorzugt ist.

In Stufe (a) werden der Polymerschmelze die Stabilisatorkomponente und gegebenenfalls weitere Zusatzstoffe (Z), in den wie oben beschriebenen Mengen, zugegeben. Möglich ist auch die Zugabe nach Stufe (a) oder Zugabe in Mischungen mit den Treibmittelkomponenten.

Stufe (b) des erfindungsgemäßen Verfahrens umfasst das Einbringen einer Treibmittelkomponente T in die in Stufe (a) hergestellte Polymerschmelze zur Ausbildung einer schäumbaren Schmelze.

Die Treibmittelkomponente (T) enthält (und besteht bevorzugt aus):
(T1) 95 bis 15 Gew.-%, bevorzugt 85 bis 15 Gew.-%, besonders bevorzugt 75 bis 15 Gew.-%, (bezogen auf T) CO₂,
(T2) 5 bis 85 Gew.-%, bevorzugt 15 bis 85 Gew.-%, besonders bevorzugt 25 bis 85 Gew.-%, (bezogen auf T) an einem oder mehreren, vorzugsweise einem oder zwei, insbesondere einem, Co-Treibmittel aus der Gruppe der C₁-C₄-Alkohole, und C₁-C₄-Carbonylverbindungen, bevorzugt C₂-C₄-Carbonylverbindungen, insbesondere C₃-C₄-Ketone und Formiate, sowie
(T3) 0 bis 30 Gew.-% (bezogen auf T) an einem oder mehreren Co-Treibmitteln aus der Gruppe der C₁-C₄-Alkane, insbesondere Isobutan.

Bevorzugt werden als Treibmittelkomponente (T) Gemische aus zwei oder mehr Treibmitteln eingesetzt. Besonders bevorzugt sind binäre und ternäre Gemische.

C₁-C₄-Carbonylverbindungen sind Ketone, Aldehyde, Carbonsäureester sowie Carbonsäureamide mit 1 bis 4 Kohlenstoffatomen.

Geeignete Ketone sind Aceton und Methylethylketon, als Formiate bevorzugt sind Methylformiat, Ethylformiat, n-Propylformiat und i-Propylformiat. Bevorzugt sind Methylformiat und Aceton. Insbesondere bevorzugt ist Aceton.

In den Treibmitteln und Co-Treibmitteln kann Wasser enthalten sein. Wasser gelangt in die Treibmittelkomponente T vor allem durch die Verwendung von technischen Chemikalien. Im Allgemeinen enthält die Treibmittelkomponente weniger als 0,2 Gew.-% Wasser, bevorzugt 0 bis 0,18 Gew.-%, mehr bevorzugt 0 bis 0,14 Gew.-%, besonders bevorzugt 0 bis 0,1 Gew.-%, insbesondere bevorzugt 0 bis 0,08 und am meisten bevorzugt 0 bis 0,05 Gew.-% Wasser (jeweils bezogen auf P). In einer bevorzugten Ausführungsform sind die Treibmittel im Wesentlichen wasserfrei.

Besonders bevorzugt als Treibmittelkomponente T sind Mischungen von Kohlendioxid und Aceton als auch Mischungen von Kohlendioxid, Aceton und *iso*-Butan. Bevorzugt weist die Polymerschmelze nach Stufe b) einen Wassergehalt von maximal 1 Gew.-%, besonders bevorzugt von weniger als 0,1 Gew.-% auf.

Erfindungsgemäß bevorzugt werden daher als Treibmittel (T1) 1 bis 5 Gewichtsteile, bevorzugt, 2,5 bis 4,5 Gewichtsteile, bezogen auf 100 Gewichtsteile P, Kohlendioxid als Treibmittel eingesetzt.

Als Co-Treibmittel (T2) werden zusätzlich 1 bis 5 Gewichtsteile, bevorzugt 1 bis 3 Gewichtsteile, bezogen auf 100 Gewichtsteile P, Aceton zugegeben.

Als weiteres Co-Treibmittel (T3) können 0 bis 1 Gewichtsteile, bevorzugt 0,1 bis 1,0 Gewichtsteile, bezogen auf 100 Gewichtsteile P, eines oder mehrerer Co-Treibmittel ausgewählt aus der Gruppe bestehend aus C₁-C₄ Alkanen zugegeben werden. Besonders bevorzugt wird Isobutan als Co-Treibmittel (T3).

Die Treibmittelkomponente T wird der Polymerschmelze bevorzugt in einem Anteil von insgesamt 1 bis 12 Gew.-%, besonders bevorzugt 1 bis 8 und insbesondere bevorzugt 1,5 bis 7 Gew.-% (jeweils bezogen auf P) zugesetzt.

Die Treibmittel können in die geschmolzene Polymerkomponente P durch jede dem Fachmann bekannte Methode eingebracht werden. Geeignet sind beispielsweise Extruder oder Mischer (zum Beispiel Kneter). In einer bevorzugten Ausführungsform wird das Treibmittel mit der geschmolzenen Polymerkomponente P unter erhöhtem Druck gemischt. Der Druck muss dabei so hoch sein, dass im Wesentlichen ein Aufschäumen des geschmolzenen Polymermaterials verhindert und eine homogene Verteilung der Treibmittelkomponente T in der geschmolzenen Polymerkomponente P erreicht wird. Geeignete Drücke sind 50 bis 500 bar (absolut), bevorzugt 100 bis 300 bar (absolut), besonders bevorzugt 150 bis 250 bar (absolut). Die Temperatur in Stufe (b) des erfindungsgemäßen Verfahrens muss so gewählt sein, dass das polymere Material im geschmolzenen Zustand vorliegt. Dazu ist es notwendig, dass die Polymerkomponente P auf eine Temperatur oberhalb der Schmelz- beziehungsweise Glasübergangstemperatur erhitzt wird. Geeignete Temperaturen betragen im Allgemeinen mindestens 150 °C, bevorzugt 160 bis 290 °C, besonders bevorzugt 220 bis 260 °C. Stufe (b) kann kontinuierlich oder diskontinuierlich durchgeführt werden, bevorzugt wird Stufe (b) kontinuierlich durchgeführt.

Die Zugabe der Treibmittel kann im Aufschmelzextruder (Primärextruder) oder in einer nachgelagerten Stufe erfolgen. Bevorzugt erfolgt die Zugabe der Treibmittel direkt im Aufschmelzextruder.

In einer bevorzugten Ausführungsform wird die schäumbare Polymerschmelze in dem Fachmann bekannten XPS-Extrudern durchgeführt, beispielsweise über einem Tandem-Aufbau aus Aufschmelzextruder (Primärextruder) und Kühlextruder (Sekundärextruder). Das Verfahren kann kontinuierlich und diskontinuierlich durchgeführt werden, wobei die Polymerkomponente P im Primärextruder aufgeschmolzen wird (Stufe (a) und die Zugabe des Treibmittels (Stufe (b) zur Ausbildung einer schäumbaren Schmelze ebenfalls im Primärextruder erfolgt. Die Einmischung und Lösung des Treibmittels kann auch über statische Mischorgane nach Stufe (a) erfolgen, beispielsweise durch statische Mischer.

Stufe (c) des erfindungsgemäßen Verfahrens umfasst das Aufschäumen der schäumbaren Schmelze, um einen Extrusionsschaumstoff zu erhalten. Dazu wird die mit Treibmittel versehene schäumbare Schmelze im Sekundärextruder auf eine für das Schäumen geeignete Temperatur gekühlt. Zudem kann das Kühlen der Schmelze teilweise oder vollständig durch statisch arbeitende Schmelzekühler, beispielsweise statische Wärmetauscher (z.B. verfügbar von Fa. Fluitec oder Fa. Sulzer) erfolgen.

Die Schmelze wird dazu durch eine geeignete Vorrichtung, beispielsweise eine Schlitzdüse, gefördert. Die Schlitzdüse wird mindestens auf die Temperatur der treibmittelhaltigen Polymerschmelze beheizt. Bevorzugt liegt die Temperatur der Düse bei 60 bis 230°C.

Die treibmittelhaltige Polymerschmelze wird durch die Düse in einen Bereich überführt, in dem ein niedrigerer Druck herrscht als in demjenigen Bereich, in dem die schäumbare Schmelze vor Extrusion durch die Düse gehalten wird. Der niedrigere Druck kann überatmosphärisch oder unteratmosphärisch sein. Bevorzugt ist die Extrusion in einen Bereich mit atmosphärischem Druck.

Stufe (c) wird ebenfalls bei einer Temperatur durchgeführt, bei der das zu schäumende polymere Material in geschmolzenem Zustand vorliegt, im Allgemeinen bei Temperaturen von 80 bis 170°C, besonders bevorzugt bei 110 bis 160°C. Dadurch, dass die treibmittelhaltige Polymerschmelze in Stufe (c) in einen Bereich überführt wird, in dem ein niedrigerer Druck herrscht, wird das Treibmittel in den gasförmigen Zustand überführt. Durch den großen Volumenanstieg wird die Polymerschmelze ausgedehnt und aufgeschäumt.

Der Druck an der Düse muss ausreichend hoch gewählt werden, um ein vorzeitiges Aufschäumen in der Düse zu vermeiden, dazu sind Drücke von mindestens 50 bar, bevorzugt 60 bis 180 bar, besonders bevorzugt 80 bis 140 bar geeignet.

Die geometrische Form des Querschnitts der nach dem erfindungsgemäßen Verfahren erhältlichen Extrusionsschaumstoffe wird im Wesentlichen durch die Wahl der Düsenplatte und gegebenenfalls durch geeignete Nachfolgeeinrichtungen wie Plattenkalibrierungen, Rollenbahnabzüge oder Bandabzüge bestimmt und ist frei wählbar.

Die Oberflächenqualität hängt bei Verwendung der erfindungsgemäßen Material- und Treibmittelzusammensetzung von der Oberflächentemperatur der Kalibriereinrichtung ab. Oberflächentemperaturen unterhalb von 50 °C führen zu starker Auskühlung der Schaumoberfläche und in der Folge zur Bildung von Längs- und Querrissen als auch zu Dickenunterschieden zwischen Rand und Mitte der Platte. Bevorzugt werden daher Kalibriereinrichtungen eingesetzt, die durch externe Quellen wie Öltemperierungen oder elektrischen Temperierungen beheizt werden können. Die Oberflächentemperaturen betragen bevorzugt mehr als 50 °C, besonders bevorzugt mehr als 100 °C. Bevorzugt ist zudem der Einsatz antihaftender Oberflächen, beispielsweise teflonbeschichtete Metalle oder mit Teflonfolien abgedeckte Metalle.

Die nach dem erfindungsgemäßen Verfahren erhältlichen Extrusionsschaumstoffe weisen bevorzugt einen rechtwinkligen Querschnitt auf. Die Dicke der Extrusionsschaumstoffe wird dabei durch die Höhe des Düsenplattenschlitzes bestimmt. Die Dicke beträgt 20 bis 300 mm, bevorzugt 20 bis 200 mm. Die Breite der Extrusionsschaumstoffe wird durch die Breite des Düsenplattenschlitzes bestimmt. Die Länge der Extrusionsschaumstoffteile wird in einem nachgelagerten Arbeitsschritt durch bekannte, dem Fachmann geläufige Verfahren wie Verkleben, Verschweißen, Zersägen und Zerschneiden bestimmt. Insbesondere bevorzugt sind Extrusionsschaumstoffteile mit einer plattenförmigen Geometrie. Plattenförmig bedeutet, dass die Abmessung der Dicke (Höhe) im Vergleich zu der Abmessung der Breite und der Abmessung der Länge des Formteils klein ist.

Für die Verbesserung der UV-Beständigkeit des Materials, zur Erhöhung der Oberflächenqualität und zur Reduzierung der Oberflächentemperatur können zudem Folienbeschichtungen im Anschluss an die Kalibrierung auf das Material aufgebracht werden. Die Folien enthalten vorzugsweise UV-Stabilisatoren und/oder Licht-Absorber und/oder Reflektoren und/oder Flammschutzmittel in erhöhter Konzentration im Vergleich zum geschäumten Material.

Bevorzugt handelt es sich bei den erfindungsgemäßen Extrusionsschaumstoffen um geschlossenzellige Schaumstoffe (s.o.) mit einer Dichte von 20 bis 60 g/l und einer Zellzahl im Bereich von 1 bis 20 Zellen pro mm. Bevorzugte Flammschutzmittel und Zusatzstoffe sind die oben genannten.

Weiterhin bevorzugt als Flammschutzmittel für einen erfindungsgemäßen Extrusionsschaumstoff sind bromierte Trialkylphosphate der Formel (I),

(O)P(OR)₃ (I)

wobei
- R: gleich oder verschieden, vorzugsweise gleich, eine geradkettige oder verzweigte Alkylgruppe mit 1 bis 6 Kohlenstoffatomen bedeutet, wobei ein, zwei oder drei Wasserstoffatome durch Brom substituiert sind, bevorzugt 3,4-Dibrom-2-(brommethyl)butyl- oder 2,3-Dibrompropyl-, besonders bevorzugt 3-Brom-2,2'-bis(brommethyl)-propyl- .

Bevorzugt sind dabei Tris(tribromneopentyl)phosphat (R = 3-Brom-2,2'-bis(brommethyl)-propyl) (TPP) und Tris(2,3-dibrompropyl)phosphat (R = 2,3-Dibrompropyl), besonders bevorzugt ist TPP (II):

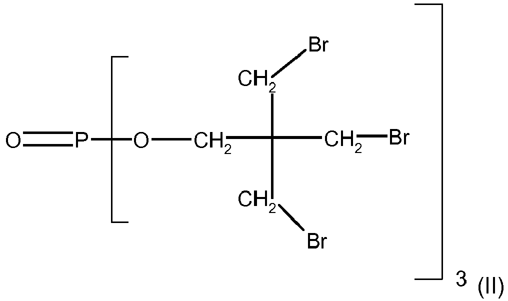

TTP ist kommerziell erhältlich, beispielsweise unter der Bezeichnung FR370 von der Firma ICL, Tel Aviv, Israel.

Besonders bevorzugt als Flammschutzmittel sind weiterhin halogenfreie Verbindungen, insbesondere organische Phosphorverbindungen.

Bevorzugt ist die Verwendung mit dem oben genannten Flammschutzsynergisten.

Bevorzugt ist ein Flammschutzsystem aus Tris(tribromneopentyl)phosphat (III) und Dicumyl oder einem oder mehreren der oben genannten Hydroxylamine und/oder Anhydride.

In einer weiteren bevorzugten Ausführungsform ist der erfindungsgemäße Schaumstoff ein expandierbares Granulat, erhältlich durch ein Verfahren umfassend die Schritte
a) Bereitstellen einer Polymerkomponente (P) aus
   P1) 30 bis 100 Gewichtsteile, bevorzugt 45 bis 75 Gewichtsteile eines oder mehrerer Styrolcopolymere, enthaltend,
   P11) 1,0 bis 35 Gew.-% (bezogen auf P1), bevorzugt 1,5-30 Gew.-%, besonders bevorzugt 2,0 bis 28 Gew.% einpolymerisierte Maleinsäureanhydrid -Einheiten,
   P12) 64 bis 99 Gew.-% bezogen auf (P1), bevorzugt 98,5-68,5 Gew.-%, besonders bevorzugt 98 bis 72 Gew.%, einpolymerisiertes Styrol und/oder alpha-Methylstyrol und
   P13) 0 bis 35 Gew.-%, bevorzugt 0 bis 30 Gew.%, besonders bevorzugt 0 bis 28 Gew.-%, (bezogen auf (P1), ein polymerisiertes Acrylnitril,
   P2) 0 bis 70 Gewichtsteile, bevorzugt 25 bis 55 eines oder mehrerer Styrol-Acrylnitril-Copolymere (SAN) mit einem Styrol- und/oder alpha-Methylstyrolgehalt im Bereich von 65 bis 90 Gew.-%, bezogen auf (P2),
   P3) 0 bis 15 Gewichtsteile, bevorzugt 0 bis 10 Gewichtsteile eines oder mehrerer thermoplastischen Polymere aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
      wobei mindestens eine der Komponenten (P13) und (P2) in einem Anteil von mindestens 1 Gew.-% bzw. Gewichtsteilen vorliegt und
      wobei die Summe aus den Polymerkomponenten (P1), (P2) und (P3) der thermoplastischen Polymere (P) 100 Gewichtsteile ergibt,
b) Erhitzen der Polymerkomponente (P) zur Ausbildung einer Polymerschmelze,
c) Einbringen von 1 bis 8 Gew.-%, bevorzugt 2,5-6,6 Gew.-% (bezogen auf P) einer Treibmittelkomponente (T) in die Polymerschmelze zur Ausbildung einer schäumbaren Schmelze,
d) Homogenisieren der Mischung,
e) Zugabe des Stabilisators und gegebenenfalls von Zusatzstoffen zu der Polymerkomponente P in mindestens einem der Schritte a), b), c) und/oder d),
f) Extrusion der treibmittelhaltigen Polymerschmelze durch eine Düsenplatte,
g) Granulieren der treibmitteilhaltigen Schmelze in einer flüssigkeitsgefüllten Kammer unter einem Druck von 1,5 bis 20 bar zu einem Granulat.

Die Treibmittelkomponente (T) kann als physikalisches Treibmittel in die Schmelze eingebracht werden oder durch chemische Treibmittel gebildet werden. Bevorzugt ist der Einsatz von physikalischen Treibmitteln.

Die Treibmittelkomponente (T) umfasst ein oder mehrere Treibmittel in einem Anteil von insgesamt 1 bis 8 Gew.-%, bevorzugt 2,5 bis 6,6 Gew.-% bezogen auf (P). Als Treibmittel eignen sich z.B. aliphatische Kohlenwasserstoffe mit 2 bis 8, vorzugsweise mit 3 bis 8 Kohlenstoffatomen und Mischungen von 2 oder mehr solcher Kohlenwasserstoffe und/oder 2 oder mehr Isomeren solcher Kohlenwasserstoffe. Weiterhin geeignet sind z.B. halogenierte Kohlenwasserstoffe, Stickstoff und Kohlendioxid. Bevorzugt sind Butan- und Pentanisomere, wie iso-Butan, n-Butan, iso-Pentan, n-Pentan und deren Mischungen, insbesondere Pentanisomere, wie iso-Pentan und n-Pentan, und Mischungen solcher Isomere. Geeignet insbesondere als Cotreibmittel, vorzugsweise in einem Anteil von 0 bis 3 Gew.-%, bevorzugt von 0,25 bis 2,5 Gew.-%, insbesondere 0,5 bis 2,0 Gew.-% (bezogen auf (P), sind (C₁-C₄)-Carbonylverbindungen, wie Ketone und Ester, C₁-C₄-Alkohole und C₁-C₄-Ether. Bevorzugt als Cotreibmittel sind Ketone, besonders bevorzugt Aceton.

Treibmittel wie Stickstoff und Kohlendioxid können auch durch den Zerfall chemischer Treibmittel erzeugt werden. In einer Ausführungsform der Erfindung werden daher zusätzlich 0,1 bis 5,0 Gew.-% (bezogen auf P) an einem oder mehreren Treibmitteln zugesetzt. Beispiele für solche chemischen Treibmittel sind Azodicarbonamid, Sulfohydrazide wie 4,4-Oxybis-benzolsulfonylhydrazid, p-Toluolsulfonylhydrazid, Benzazimide, p-Toluolsulfonylhydrazid, Benzazimide, p-Toluolsulfonylsemicarbazid, Dinitrosopentamethylentetramin und Phenyltetrazol.

Zur Herstellung des erfindungsgemäßen Granulats und des daraus erhaltenen Partikelschaums wird das Treibmittel, vorzugsweise bei erhöhten Drücken, insbesondere von 20 bis 500 bar, bevorzugt bei 40 bis 280 bar, direkt in die Polymerschmelze eingemischt. Zudem kann ein bereits mit dem Treibmittel imprägniertes Polymermaterial eingesetzt werden, das vor der Zugabe des Treibmittels entgast wird oder bevorzugt mit dem Treibmittel aufgeschmolzen in den Prozess eingebracht wird. Ein mögliches Verfahren umfasst die Stufen a) Bereitstellung der Polymere, b) Schmelzeerzeugung, c) Einbringung und Mischen der Treibmittel, d) Homogenisieren, e) gegebenenfalls Zugabe von Additiven und f) Granulieren. Jede der Stufen a) bis e) kann durch die in der Kunststoffverarbeitung bekannten Apparate oder Apparatekombinationen ausgeführt werden. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Zur Einmischung der Treibmittel eignen sich statische Mischer oder dynamische Mischer, beispielsweise Extruder. Zur Einstellung der gewünschten Schmelzetemperatur kann gegebenenfalls eine Kühlung der Schmelze vorgenommen werden. Dazu eignen sich die eingesetzten Mischaggregate, separaten Kühler oder Wärmeaustauscher. Die Granulierung erfolgt durch druckbeaufschlagte Granulierung in einer flüssigkeits-, insbesondere wassergefüllten Kammer. Damit wird eine Expansion der treibmittelhaltigen Schmelze beim Düsenaustritt zumindest teilweise unterdrückt. Zum Druckaufbau für die Düsen der Granulierung kann das Mischaggregat (Extruder) an sich oder ein zusätzliches, druckaufbauendes Schmelzeaggregat eingesetzt werden. Bevorzug wird eine Zahnradpumpe eingesetzt. Zur Durchführung des Verfahrens geeignete Apparateanordnungen sind beispielsweise, ohne darauf beschränkt zu sein:
- Polymerisationsreaktor - statischer Mischer/Kühler - Zahnradpumpe - Granulator
- Polymerisationsreaktor - Schmelzeextruder - Zahnradpumpe - Granulator
- Extruder - statischer Mischer - Granulator
- Extruder - Zahnradpumpe - Granulator
- Extruder - Zahnradpumpe - statischer Mischer - Granulator
- Extruder - statischer Mischer - Zahnradpumpe - Granulator
- Extruder - Granulator.
- Extruder - statischer Mischer - Zahnradpumpe - Granulator
- Extruder - Zahnradpumpe - statischer Mischer / Wärmetauscher - Zahnradpumpe - Granulator
- Extruder - statischer Mischer - Zahnradpumpe - statischer Mischer / Wärmetauscher - Zahnradpumpe - Granulator.

Bevorzugt sind die Anordnungen:
- Extruder - Zahnradpumpe - Granulator
- Extruder - Zahnradpumpe - statischer Mischer - Granulator.

Weiterhin vorteilhaft ist die Schmelzeimprägnierung während des Extrusionsschritts durch Zugabe des Treibmittels im Extruder, wodurch Verweilzeit und thermische Belastung des Materials bei der Herstellung der Granulate deutlich vermindert werden können.

Weiterhin kann die Anordnung ein oder mehrere Seitenextruder oder Seitenbeschickungen zur Einbringung von weiteren Polymeren und Additiven, z.B. von Feststoffen oder thermisch empfindlichen Zusatzstoffen aufweisen. Zudem können flüssige Additive an jedem Ort des Verfahrens injiziert werden, bevorzugt im Bereich der statischen und dynamischen Mischaggregate.

Die treibmittelhaltige Polymerschmelze wird in der Regel mit einer Temperatur im Bereich von 150 bis 300 °C, bevorzugt 180 bis 260°C, besonders bevorzugt im Bereich von 190 bis 240 °C durch die Düsenplatte gefördert.

Die Düsenplatte wird bevorzugt auf mindestens 10 °C über der Temperatur der treibmittelhaltigen Polymerschmelze beheizt, um Polymerablagerungen in den Düsen zu verhindern und eine störungsfreie Granulierung zu gewährleisten. Bevorzugt liegt die Temperatur der Düsenplatte im Bereich von 10 bis 200°C, besonders bevorzugt 10 bis 100 °C über der Temperatur der treibmittelhaltigen Polymerschmelze

Die Extrusion durch die Düsenplatte erfolgt in eine Kammer, die mit einer Flüssigkeit, bevorzugt Wasser, gefüllt ist. Die Temperatur der Flüssigkeit liegt bevorzugt im Bereich von 20 bis 95 °C, besonders bevorzugt 40 bis 80 °C.

Um marktfähige Granulatgrößen zu erhalten, liegt der Durchmesser (D) der Düsenbohrungen am Düsenaustritt bevorzugt im Bereich von 0,2 bis 2,0 mm, besonders bevorzugt im Bereich von 0,3 bis 1,5 mm, insbesondere im Bereich von 0,3 bis 1,0 mm. Damit lassen sich auch nach Strangaufweitung Granulatgrößen unter 2,5 mm, insbesondere im Bereich 0,4 bis 1,5 mm gezielt einstellen.

Bevorzugt ist ein Verfahren zur Herstellung eines erfindungsgemäßen Granulats, umfassend die Schritte
a) Her- oder Bereitstellen einer Schmelze der Polymerkomponente (P1) bis (P3),
b) Einmischen von mindestens einer physikalischen Treibmittelkomponente und gegebenenfalls von Additiven, wie Wasser oder Talkum, in die Polymerschmelze mittels statischer oder dynamischer Mischer bei einer Temperatur von mindestens 150°C,
c) thermisches Homogenisieren und ggf. Kühlen der Treibmittel- und Polymerschmelze auf eine Temperatur von mindestens 120°C
d) Austrag durch eine Düsenplatte mit Bohrungen, deren Durchmesser am Düsenaustritt höchstens 1,5 mm beträgt,
e) Gegebenenfalls Zugabe von Additiven zu der Polymerkomponente P oder in mindestens einem der Schritte a), b), und/oder c),
f) Granulieren der treibmittelhaltigen Schmelze direkt hinter der Düsenplatte in einer Flüssigkeit, bevorzugt Wasser, bei einem Druck im Bereich von 1 bis 20 bar zu einem Granulat.

In einer bevorzugten Ausführungsform sind die expandierbaren Granulate mit einer oder mehreren Beschichtungskomponenten beschichtet, wobei diese Beschichtungskomponenten gegebenenfalls an einen porenhaltigen Feststoff adsorbiert sein können.

Als Beschichtungskomponenten eignen sich beispielsweise Glycerinester, Zinkstearat und Ester der Zitronensäure.

Bevorzugt sind die Mono-, Di- und Triglyceride, die aus Glycerin und Stearinsäure, Glycerin und 12-Hydroxystearinsäure und Glycerin und Ricinolsäure erhältlich sind, sowie gemischte Di- und Triglyceride, die neben Stearinsäure, 12-Hydroxystearinsäure und Ricinolsäure aus einer oder zwei Fettsäuren aus der Gruppe Ölsäure, Linolsäure, Linolensäure und Palmitinsäure erhältlich sind.

Besonders bevorzugt sind die entsprechenden Handelsprodukte, welche im Allgemeinen Mischungen der entsprechenden Mono-, Di- und Triester darstellen, die auch geringe Anteile an freiem Glycerin und freien Fettsäuren enthalten können, wie beispielsweise Glycerintri- oder Glycerinmonostearate.

Bevorzugt als Beschichtungsmaterial sind weiterhin Weichmacher aus der Gruppe bestehend aus a) einem oder mehreren Alkylestern von Cyclohexancarbonsäuren mit einem Siedepunkt ≥ 160 °C, b) einem oder mehreren C₁₀-C₂₁-Alkansulfonsäurephenylestern mit einem Siedepunkt ≥ 150 °C und c) Mischungen der Komponenten a) und b).

Bevorzugt als Weichmacher a) sind Alkylester von Cyclohexancarbonsäuren der Formel (I), 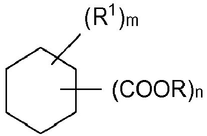 worin die Symbole und Indizes folgende Bedeutungen haben:
R¹ ist C₁-C₁₀-Alkyl oder C₃-C₈-Cycloalkyl; vorzugsweise C₁-C₁₀-Alkyl;
m ist 0, 1, 2 oder 3;
n ist 1, 2, 3 oder 4 und
R ist C₁-C₃₀-Alkyl.

Besonders bevorzugt haben die Symbole und Indizes in der Formel (I) folgende Bedeutungen:
m ist 0;
n ist 2 und
R ist C₈-C₁₀-Alkyl.

Insbesondere handelt es sich um 1,2-Cyclohexandicarbonsäurediisononylester, wie er zum Beispiel unter der Bezeichnung Hexamoll^{®} DINCH von der BASF SE (Ludwigshafen, Deutschland) vertrieben wird. Herstellung und Verwendung als Weichmacher sind beispielsweise in der WO99/32427 und der DE 20021356 beschrieben.

Weiterhin bevorzugt als Weichmacher sind Phenylester von (C₁₀-C₂₁)-Alkylsulfonsäuren der Formel (II) (Komponente b)) 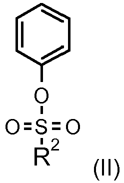 wobei
R² (C₁₀-C₂₁)-Alkyl, bevorzugt (C₁₃-C₁₇)-Alkyl, ist.

Bevorzugte Weichmacher b) sind Mischungen aus (C₁₀-C₂₁)-Alkansulfonsäure-phenylestern. Besonders bevorzugt ist dabei eine Mischung, die zu 75 bis 85 % aus einem Gemisch sekundärer Alkansulfonsäurephenylester besteht und zusätzlich 15 bis 25 % sekundäre Alkandisulfonsäurediphenylester sowie 2 bis 3 % nicht sulfonierte Alkane enthält, wobei die Alkylreste überwiegend unverzweigt sind und die Kettenlängen im Bereich von 10 bis 21 hauptsächlich von 13 bis 17 Kohlenstoffatomen liegen.

Solche Gemische werden zum Beispiel unter den Mesamoll^{®} Marken von der Lanxess AG (Leverkusen, Deutschland) vertrieben.

Bevorzugt wird der erfindungsgemäß eingesetzte Weichmacher in einer Menge von 0,01 bis 1 Gew.-%, bevorzugt 0,1-0.8 Gew.-%, besonders bevorzugt 0,2-0,5 Gew.-%, auf das expandierbare Granulat aufgebracht.

Die expandierbaren Granulatpartikel werden bevorzugt zu erfindungsgemäßen Schaumstoffen mit Dichten im Bereich von 20 bis 150 g/l, bevorzugt 20 bis 100 g/l verarbeitet. Hierzu werden die expandierbaren Partikel vorgeschäumt. Dies geschieht zumeist durch Erwärmen mit Wasserdampf in sogenannten Vorschäumern. Die so vorgeschäumten Partikel werden danach zu Formköpern verschweißt. Hierzu werden die vorgeschäumten Partikel in nicht gasdicht schließende Formen gebracht und mit Wasserdampf beaufschlagt. Nach dem Abkühlen können die erfindungsgemäßen Formteile entnommen werden.

Erfindungsgemäße Partikelschaumformteile weisen bevorzugt eine Druckfestigkeit in alle drei Raumrichtungen von mindestens 100 kPa auf.

Die erfindungsgemäßen Schäume, Platten und Formteile aus erfindungsgemäßen Extrusions- und Partikelschäumen finden vorzugsweise Verwendung als Isolationsmaterial für technische Anwendungen und den Baubereich oder als Schaumelement für Leichtbau- und Verbundanwendungen, beispielsweise in Automobilanwendungen und Windkraftanlagen, insbesondere in Rotorblättern solcher Windkraftanlagen, im Messebau sowie im Boots- und Schiffsbau.

Neben diesen und den oben genannten Verwendungen ist eine Verwendung für Verbundformteile insbesondere für den Möbelbau bevorzugt. Zu diesem Zweck wird auf erfindungsgemäße Schaumformteile, welche in Form einer Schaumplatte vorliegen, nach bekannten, dem Fachmann geläufigen Methoden mindestens eine weitere Schicht aufgebracht.

Neben einer ersten Schicht aus der beschriebenen Schaumplatte enthalten derartige Verbundformteile somit mindestens eine weitere Schicht. Bevorzugt ist die erste Schicht wenigstens auf zwei Flächen mit einer oder mehreren weiteren Schichten verbunden. Weiterhin bevorzugt ist die erste Schicht auf mindestens zwei Flächen (im Fall eines rechtwinkligen Querschnitts oben und unten), ebenso bevorzugt sind alle Flächen mit einer oder mehreren weiteren Schichten verbunden.

In einer Ausführungsform der Erfindung besteht der Aufbau des Verbundformteils aus einer oder mehreren Kernschichten, einer oder mehreren Deckschichten und einer Oberflächenschicht.

In einer weiteren Ausführungsform der Erfindung besteht der Aufbau des Verbundformteils aus einer Kernschicht und einer Oberflächenschicht.

Zur Beplankung als Oberflächen- und gegebenenfalls Deckschicht sind beispielsweise Aminoplastharzfilme, insbesondere Melaminfilme, PVC (Polyvinylchlorid), Glasfaserverstärkter Kunststoff (GFK), beispielsweise ein Verbund aus Polyesterharz, Epoxiharz, oder Polyamid und Glasfasern, Vorimprägnate, Folien, Laminate, beispielsweise HPL (high pressure laminate) und CPL (continuous pressure laminate), Furniere, und Metall-, insbesondere Aluminium- oder Bleibeschichtungen, geeignet. Weiterhin geeignet sind Gewebe und Vliesstoffe, insbesondere aus Natur- und/oder Kunstfasern.

Weiterhin kommen für eine Beplankung der erfindungsgemäßen Verbundformteile alle Werkstoffe in Betracht, die aus Holzstreifen, Holzfasern, Holzspänen, Hölzern, Holzfurnieren, verleimten Hölzern, Furnieren oder einer Kombination der entsprechenden Herstellungsverfahren gefertigt sind. Ebenfalls bevorzugt ist eine Beplankung der erfindungsgemäßen Formteile mit OSB, Spanplatten, HDF (hochdichte Faserplatten) oder MDF (mitteldichte Faserplatten), insbesondere dünnen Spanplatten, HDF und MDF mit einer Dicke von 2 bis 10 mm.

Als Klebstoffe können übliche Materialien, beispielsweise Dispersionsklebstoffe z.B. Weißleim, Epoxidharze, Formaldehyd-Kondensationsharze, wie Phenolharze, Harnstoff-Formaldehyd-Harze, Melamin-Formaldehyd-Harze, Melamin-Harnstoff-Formaldehyd-Harze, Resorcin- und Phenolresorcinharze, Isocyanatklebstoffe, Polyurethanklebstoffe und Schmelzkleber verwendet werden.

Die Erfindung wird durch die Beispiele näher erläutert, ohne sie dadurch beschränken zu wollen.

### Beispiele:

Eingesetzte Rohstoffe
- Xiran^{®} SZ26080:: SMA mit einem Maleinsäureanhydridgehalt von 26 Gew.-% und einer Viskositätszahl von 80 ml/g der Firma Polyscope Polymers BV
- Luran^{®} 3380:: SAN mit einem Acrylnitrilgehalt von 33 Gew.-% und einer Viskositätszahl von 80 ml/g (Handelsprodukt der Styrolution GmbH)
- Luran^{®} 2580:: SAN mit einem Acrylnitrilgehalt von 25 Gew.-% und einer Viskositätszahl von 80 ml/g (Handelsprodukt der Styrolution GmbH)
- Luran^{®} HH 120:: AMSAN mit einem Acrylnitrilgehalt von 29,5 Gew.-% und einem MVR (220 °C, 10 kg) von 7 ml/10 min (Handelsprodukt der Styrolution GmbH)
- Luran^{®} VLN:: SAN mit einem Acrylnitrilgehalt von ca. 25 Gew.-% und einer Viskositätszahl von 65 ml/g (Handelsprodukt der Styrolution GmbH)
- SANMA: Styrol-Acrylnitril-Maleinsäureanhydrid-Terpolymer mit einem Acrylnitrilgehalt von 24 Gew.-% und einem Maleinsäuregehalt von 2,1 Gew.-% (Produkt der BASF SE)
- Irgafos^{®} 168:: Tris(2,4-di-tert-butylphenyl)phosphit der Firma BASF SE
- Irganox^{®} 3052:: 2,2'-Methylenebis-(4-methyl-6-tert-butylphenol)monoacrylate der Firma BASF SE
- Irganox^{®} 245:: Triethylenglycol-bis-(3-tert-butyl-4-hydroxy-5-methylphenyl)-propionate der Firma BASF SE
- Prostab^{®} 5198: sterisch gehinderter Aminnitroxid-Inhibitor (Handelsprodukt der BASF SE)

Calciumstearat, Zinkstearat, Triphenylphosphan, Triphenylphosphat, Dihydrotalcit, Aluminiumhydroxid, Magnesiumhydroxid: Handelsprodukte der Firma Sigma Aldrich

### 1 Vernetzungsversuche

Zur Ermittlung der kritischen Temperatur ab der es zur CO₂-Abspaltung kommt, wurden thermische Untersuchungen beispielhaft mit einem SMA-Copolymer (Xiran 26080) durchgeführt. Diesen Untersuchungen zufolge spaltet Xiran 26080, beginnend ab ca. 250 °C und in verstärktem Maße bei höheren Temperaturen CO₂ ab. Die folgende Tabelle 1 gibt dies wieder:

**Tab. 1 Abspaltung von CO₂ aus Xiran 26080 in Abhängigkeit der Temperatur.**

| Temperatur [°C] | Dauer [h] der thermischen Behandlung | Menge CO₂ [g/100 g] |
|---|---|---|
| 250 | 3 | 0.26 |
| 275 | 3 | 6.75 |
| 300 | 3 | 12.9 |

Als Konsequenz muss die Temperatur zur Vermeidung der CO₂-Abspaltung und der anschließenden Vernetzung ohne den Zusatz eines Stabilisators deutlich unter 250 °C gehalten werden. Im Fall technischer Probleme beim Extrusionsvorgang ist dies jedoch nicht immer zu Gewährleisten.

Zur Studie potentieller Vernetzungsinhibitoren wurden Polymermatrizen bestehend aus SAN- und SMA-Copolymeren (Details, siehe Tab. 2) mit verschiedenen niedermolekularen Systemen untersucht. Zur Probenvorbereitung wurden jeweils 10 g einer Mischung aus Luran VLN/Luran 2580/Luran 3380 (SAN) und Xiran 26080 (SMA), gelöst in Aceton, mit dem entsprechenden, potentiellen Vernetzungsinhibitor (verschiedene Konzentrationen) versetzt und über eine Dauer von 5 h gut miteinander vermischt. Anschließend wurde langsam das Lösungsmittel unter Normal-Atmosphäre verdampft und das erhaltene Probeteil zur vollständigen Entfernung des Lösungsmittels bei 50 °C für 24 h getrocknet.

Für die folgenden Untersuchungen wurde das finale Probeteil halbiert und eine Hälfte unter Stickstoffatmosphäre (zur Simulation der Sauerstofffreien Umgebung im Extruder) für 3 h bei -260 °C getempert. Den obigen Messungen zufolge führt dies zur Abspaltung von CO₂, was die anschließende intermolekulare Vernetzung einleitet. Zusätzlich wurde eine Probe ohne Zusatz des potentiellen Vernetzungsinhibitors als Vergleichsmuster vorbereitet. Im Anschluss daran wurden alle Proben - getemperte als auch thermisch unbehandelte - in jeweils der gleichen Menge Aceton gelöst und der Vernetzungsgrad eingeschätzt. Vernetzte Proben lassen sich aufgrund des Molekulargewichtsaufbaus nicht mehr in Aceton lösen. Je höher der Vernetzungsgrad, desto geringer die Löslichkeit. Unvernetzte bzw. nur sehr gering vernetzte Proben lassen sich hingegen in Aceton lösen.

**Tab. 2 Untersuchte, potentielle Vernetzungsinhibitoren in Luran/Xiran und relativer Vernetzungsgrad: "++" = keine/nahezu keine beobachtbare Vernetzung, Inhibitor sehr gut geeignet; "+" gering beobachtbare Vernetzung, Inhibitor gut geeignet; "o"Vernetzung sichtbar, Inhibitor mäßig geeignet; "-" = Vernetzung, Inhibitor wenig geeignet; "--" = sehr starke Vernetzung, Inhibitor ungeeignet.**

| Beispiel | Potentieller Vernetzungs stabilisator | Einstufung Vernetzungs grad | Menge potentieller Vernetzungsstabilisator (bezogen auf Polymer) [%] | Polymermatrix |
|---|---|---|---|---|
| 1 | Tris(2,4-di-tert-butylphenyl)phosphit | + | 0,5 | Luran VLN:Xiran 26080 (2:3) |
| 2 | Tris(2,4-di-tert-butylphenyl)phosphit | ++ | 3 | Luran VLN:Xiran 26080 (2:3) |
| 3 | Tris(2,4-di-tert-butylphenyl)phosphit | ++ | 3 | Luran 3380:Xiran 26080 (1:1) |
| 4 | 1,3,5-Tris(2-hydroxyethyl)cyanursäure-diphenylphosphinit | ++ | 0,5 | Luran VLN:Xiran 26080 (2:3) |
| 5 | 1,3,5-Tris(2-hydroxyethyl)cyanursäure-diphenylphosphinit | + | 0,5 | Luran 2580:Xiran 26080 (1:1) |
| 6 | 1,3,5-Tris(2-hydroxyethyl)cyanursäure-diphenylphosphinit | ++ | 3 | Luran VLN:Xiran 26080 (2:3) |
| V1 | Dihydrotalcit | -- | 0,5 | Luran VLN:Xiran 26080 (2:3) |
| V2 | Dihydrotalcit | -- | 0,5 | Luran 3380:Xiran 26080 (1:1) |
| V3 | Dihydrotalcit | -- | 3 | Luran VLN:Xiran 26080 (2:3) |
| V4 | Al(OH)₃ | -- | 0,5 | Luran VLN:Xiran 26080 (2:3) |
| V5 | Al(OH)₃ | -- | 3 | Luran VLN:Xiran 26080 (2:3) |
| V6 | Al(OH)₃ | -- | 3 | Luran 3380:Xiran 26080 (1:1) |
| V7 | Mg(OH)₂ | -- | 0,5 | Luran VLN:Xiran 26080 (2:3) |
| V8 | Mg(OH)₂ | -- | 0,5 | Luran 3380:Xiran 26080 (1:1) |
| V9 | Mg(OH)₂ | -- | 3 | Luran 3380:Xiran 26080 (1:1) |
| V10 | Calciumstearat | -- | 0,5 | Luran VLN:Xiran 26080 (2:3) |
| V11 | Calciumstearat | -- | 3 | Luran VLN:Xiran 26080 (2:3) |
| V12 | Zinkstearat | ○ | 0,5 | Luran VLN:Xiran 26080 (2:3) |
| V13 | Zinkstearat | -- | 3 | Luran VLN:Xiran 26080 (2:3) |
| V14 | Prostab^{®} 5198 | -- | 0,5 | Luran VLN:Xiran 26080 (2:3) |
| V15 | Prostab^{®} 5198 | -- | 3 | Luran VLN:Xiran 26080 (2:3) |
| V16 | Irganox^{®} 3052 | -- | 0,5 | Luran VLN:Xiran 26080 (2:3) |
| V17 | Irganox^{®} 3052 | -- | 3 | Luran VLN:Xiran 26080 (2:3) |
| V18 | Irganox^{®} 3052 | -- | 3 | Luran 2580:Xiran 26080 (1:1) |
| V19 | Irganox^{®} 245 | -- | 0,5 | Luran VLN:Xiran 26080 (2:3) |
| V20 | Irganox^{®} 245 | -- | 3 | Luran VLN:Xiran 26080 (2:3) |
| V21 | Triphenylphosphan | ○ | 0,5 | Luran VLN:Xiran 26080 (2:3) |
| V22 | Triphenylphosphan | - | 3 | Luran VLN:Xiran 26080 (2:3) |
| V23 | Triphenylphophat | - | 0,5 | Luran VLN:Xiran 26080 (2:3) |
| V24 | Triphenylphophat | ○ | 3 | Luran VLN:Xiran 26080 (2:3) |
| V25 | 2,3,4,5-Tetrahydrofuran-2,5-yl-dimethyl-2,5-bis(diphenylphosphinat) | -- | 0,5 | Luran VLN:Xiran 26080 (2:3) |
| V26 | 2,3,4,5-Tetrahydrofuran-2,5-yl-dimethyl-2,5-bis(diphenylphosphinat) | -- | 3 | Luran VLN:Xiran 26080 (2:3) |
| V27 | 2,3,4,5-Tetrahydrofuran-2,5-yl-dimethyl-2,5-bis(diphenylphosphinat) | - | 3 | Luran 2580:Xiran 26080 (1:1) |
| V28 | 9,10-Dihydro-9-oxa-10-phosphaphenanthren-10-oxid | - | 0,5 | Luran VLN:Xiran 26080 (2:3) |
| V29 | 9,10-Dihydro-9-oxa-10-phosphaphenanthren-10-oxid | ○ | 3 | Luran VLN:Xiran 26080 (2:3) |
| V30 | 9,10-Dihydro-9-oxa-10-phosphaphenanthren-10-oxid | ○ | 3 | Luran 2580:Xiran 26080 (1:1) |

### 2 Ergebnisse Schaumfolientests

In einem weiteren Ansatz wurden wie oben beschrieben die jeweiligen Mischungen der Polymere mit den potentiellen Vernetzungsinhibitoren hergestellt, zum lösen jedoch Methylenchlorid verwendet. Zusätzlich wurden den jeweiligen Proben verschiedene Flammschutzmittel zugesetzt. Nach dem Abdampfen des Lösungsmittels unter Normal-Atmosphäre wurden die Probenkörper zum Herstellen entsprechender Schaumteile für Brandtests für einige Minuten bei 110 °C im Ofen behandelt. Die erhaltenen Schaumteile wurden daraufhin verbrannt und deren Brandverhalten eingeschätzt. Dabei zeigte sich mit verschiedenen DOPO-Derivaten als auch mit Phosphinsäure-basierten Flammschutzmitteln in Kombination mit Tris(2,4-di-tert-butylphenyl)phosphit (Irgafos 168) eine synergistische Wirkung.

## Patentansprüche

1. Schaumstoff auf Basis von thermoplastischen Polymeren P, enthaltend,
P1) 30 bis 100 Gewichtsteile, bevorzugt 45 bis 75 Gewichtsteile eines oder mehrerer Styrolcopolymere, enthaltend,
P11) 1,0 bis 35 Gew.-% (bezogen auf P1), bevorzugt 1,5-30 Gew.-%, besonders bevorzugt 2,0 bis 28 Gew.% einpolymerisierte Maleinsäureanhydrid -Einheiten,
P12) 64 bis 99 Gew.-% bezogen auf (P1), bevorzugt 98,5-68,5 Gew.-%, besonders bevorzugt 98 bis 72 Gew.%, einpolymerisiertes Styrol und/oder alpha-Methylstyrol und
P13) 0 bis 35 Gew.-%, bevorzugt 0 bis 30 Gew.-%, besonders bevorzugt 0 bis 28 Gew.-%, (bezogen auf (P1), einpolymerisiertes Acrylnitril,
P2) 0 bis 70 Gewichtsteile, bevorzugt 25 bis 55 eines oder mehrerer Styrol-Acrylnitril-Copolymere (SAN) mit einem Styrol- und/oder alpha-Methylstyrolgehalt im Bereich von 65 bis 90 Gew.-%, bezogen auf (P2),
P3) 0 bis 15 Gewichtsteile, bevorzugt 0 bis 10 Gewichtsteile eines oder mehrerer thermoplastischen Polymere aus der Gruppe bestehend aus von P1 und P2 verschiedenen Styrolpolymeren, Polyacrylaten, Polycarbonaten, Polyestern, Polyamiden, Polyethersulfonen, Polyetherketonen und Polyethersulfiden,
wobei mindestens eine der Komponenten (P13) und (P2) in einem Anteil von mindestens 1 Gew.-% bzw. Gewichtsteilen vorliegt und
wobei die Summe aus den Polymerkomponenten (P1), (P2) und (P3) der thermoplastischen Polymere (P) 100 Gewichtsteile ergibt,
S) 0,1 bis 5 Gewichtsteile, bevorzugt 0,5 bis 3 Gewichtsanteile, bezogen auf P, mindestens eines Stabilisators aus der Gruppe bestehend aus
S1) Phosphiten der Formel (I)
P(OR)₃ (I)
wobei
R gleich oder verschieden, vorzugsweise gleich, eine Phenylgruppe bedeutet, die mit 1 bis 3 C₁-C₆-Alkylgruppen substituiert ist,
und
S2) Phosphiniten der Formel (II), 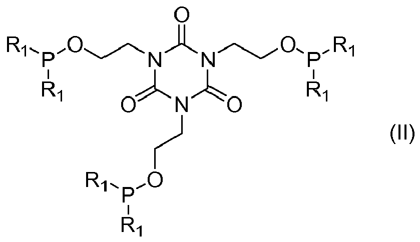 wobei R¹ gleich oder verschieden, vorzugsweise gleich, eine Phenylgruppe, die mit 1 bis 3 C₁-C₆-Alkylgruppen substituiert ist oder eine C₁-C₁₀-Alkylgruppe bedeutet und
Z) 0,1 bis 10 Gewichtsteile bezogen auf P, weiterer Zusatzstoffe.

2. Schaumstoff gemäß Anspruch 1, wobei der Stabilisator entweder Tris(2,4-di-tert-butylphenyl)phosphit oder 1,3,5-Tris(2-hydroxyethyl)cyanursäure-diphenylphosphinit ist.

3. Schaumstoff gemäß Anspruch 1 oder 2 in Form eines Extrusionsschaumstoffes.

4. Schaumstoff gemäß Anspruch 1 oder 2 in Form eines expandierbaren Granulats.

5. Verfahren zur Herstellung eines Schaumstoffs gemäß Anspruch 1, umfassend die Schritte
(a) Erzeugen einer Polymerschmelze aus thermoplastischen Polymeren P, Stabilisator und gegebenenfalls weiteren Zusatzstoffen gemäß Anspruch 1,
(b) Einbringen eines oder mehrerer Treibmittel,
(c) Extrusion oder Granulierung der schäumbaren Schmelze zu dem gewünschten Schaumstoffprodukt.

6. Verfahren gemäß Anspruch 5 zur Herstellung eines Extrusionsschaumstoffs, umfassend die Schritte
(a) Erzeugen einer Polymerschmelze aus thermoplastischen Polymeren P, Stabilisator S und gegebenenfalls Zusatzstoffen Z gemäß Anspruch 1,
(b) Einbringen einer Treibmittelkomponente, enthaltend
T1) 1 bis 5 Gewichtsteile, bezogen auf P, Kohlendioxid als Treibmittel,
T2) 1 bis 5 Gewichtsteile, bezogen auf P, Aceton als Cotreibmittel,
T3) 0 bis 1 Gewichtsteile, bezogen auf P, eines oder mehrerer Co-Treibmittel ausgewählt aus der Gruppe bestehend aus C₁-C₄ Alkanen,
in die Polymerschmelze zur Ausbildung einer schäumbaren Schmelze,
(c) Extrusion der schäumbaren Schmelze in einen Bereich niedrigeren Drucks unter Aufschäumen zu dem Extrusionsschaum.

7. Verfahren gemäß Anspruch 5 zur Herstellung eines expandierbaren Granulats umfassend die Schritte
a) Bereitstellen einer Polymerkomponente (P) gemäß Anspruch 1,
b) Erhitzen der Polymerkomponente (P) zur Ausbildung einer Polymerschmelze,
c) Einbringen von 1 bis 8 Gew.-% (bezogen auf P) einer Treibmittelkomponente (T) in die Polymerschmelze zur Ausbildung einer schäumbaren Schmelze,
d) Homogenisieren der Mischung,
e) Zugabe des Stabilisators (S) und gegebenenfalls von Zusatzstoffen (Z) gemäß Anspruch 1 zu der Polymerkomponente P in mindestens einem der Schritte a), b), c) und/oder d),
f) Extrusion der treibmittelhaltigen Polymerschmelze durch eine Düsenplatte,
g) Granulieren der treibmitteilhaltigen Schmelze in einer flüssigkeitsgefüllten Kammer unter einem Druck von 1,5 bis 20 bar zu einem Granulat.

8. Schaumformteil erhältlich aus einem expandierbaren Granulat gemäß Anspruch 4.

9. Verwendung des Schaumformteils gemäß Anspruch 7 oder des Extrusionsschaumstoffs gemäß Anspruch 3 als Isoliermaterial für technische Anwendungen und den Baubereich oder als Schaumelement für Leichtbau- und Verbundanwendungen als Strukturschaum in Windkraftanlagen.

10. Verbundformteil, enthaltend eine erste Schicht und eine oder mehrere weitere mit der ersten Schicht verbundene Schichten, wobei die erste Schicht ein Schaumformteil gemäß Anspruch 8 oder ein Extrusionsschaumstoff gemäß Anspruch 3 ist.

11. Verbundformteil nach Anspruch 10, wobei mindestens eine weitere Schicht aus Aluminium, High Pressure Laminate, Holzfurnier, GFK, Kunstharz oder PVC besteht.

12. Verwendung des Verbundformteils gemäß Anspruch 10 oder 11 im Möbelbau.

13. Verwendung des Extrusionsschaumstoffs gemäß Anspruch 3, des Schaumformteils gemäß Anspruch 8 oder des Verbundformteils gemäß Anspruch 10 oder 11 in der Automobilindustrie, im Boots- und/oder Schiffbau, der Bauindustrie, als Strukturschaum in Windkraftanlagen und im Messebereich.
